# FASCICULE DE BREVET EUROPEEN

(11) **EP 4 166 735 B1**
(45) Date de publication et mention de la délivrance du brevet: **15.05.2024**
(21) Numéro de dépôt: 22199625.9
(22) Date de dépôt: 04.10.2022
(51) Int. Cl.: E04H 15/06, B60P 3/38

(54) **TENTE MUNIE D'UNE CASQUETTE DÉPLOYABLE**
ZELT MIT AUSFAHRBARER ABDECKUNG
TENT WITH A DEPLOYABLE COVER

(30) Priorité: 15.10.2021 FR 2110967
(43) Date de publication de la demande: 19.04.2023
(73) Titulaire: Decathlon, 59650 Villeneuve d'Ascq (FR)
(72) Inventeur: LAFOUX, Benjamin, 59650 Villeneuve d'Ascq (FR); BRUNETEAU, Emilien, 59650 Villeneuve d'Ascq (FR)
(74) Mandataire: Cabinet Beau de Loménie

(56) Documents cités:
- FR-A- 1 190 343
- US-A1- 2020 048 926
- US-B1- 10 890 010
- US-B2- 9 567 767

## Description

### Domaine Technique

La présente invention porte sur le domaine technique des tentes déployables pour la pratique du camping, munies d'une ossature et d'une toile de tente coopérant avec l'ossature. De telles tentes sont dites déployables car elles peuvent prendre une position déployée permettant leur utilisation et une position repliée dans laquelle elles peuvent être rangées.

La présente invention concerne plus précisément les tentes configurées pour reposer sur un sol ou pour être placées sur le toit d'un véhicule et dont l'ossature comprend deux parties d'embase pouvant être dépliées, à la manière d'un éventail, ces tentes étant en outre munies d'au moins une casquette pour protéger l'utilisateur du soleil ou de la pluie.

### Technique antérieure

On connait des tentes telles que celle décrite dans le document US 9 567 767 B2, configurée pour être placée sur le toit d'un véhicule. Cette tente comprend une ossature munie de deux parties d'embase et d'une pluralité d'arceaux pouvant être dépliés tel un éventail. La tente de ce document comprend en outre une toile de tente coopérant avec l'ossature et comportant un corps de toile et une casquette reliée au corps de toile. Afin de déployer la casquette pour protéger l'utilisateur, des tiges métalliques rapportées sont disposées par l'utilisateur entre le corps de toile et des extrémités de la casquette.

Un inconvénient de cette tente est que les tiges métalliques permettant de tendre et déployer la casquette doivent être mises en place manuellement après avoir déployé la tente. Il convient notamment d'introduire les extrémités des tiges métalliques dans des oeillets disposés sur le corps de toile et la casquette. Cette étape de mise en place d'une tige métallique peut être particulièrement longue et fastidieuse et doit être répétée de nombreuses fois, suivant le nombre de casquettes devant être formées. En outre, l'installation des tiges métalliques peut s'avérer dangereuse dans la mesure où elles doivent être mises sous tension et risquent d'être projetées en direction de l'utilisateur en cas de mauvais positionnement. En outre, dans le cas où la tente est placée sur le toit d'un véhicule, ces étapes de mise en place doivent être réalisées en hauteur, l'utilisateur risquant alors de tomber et de se blesser.

La formation des casquettes de cette tente selon l'invention est donc particulièrement longue et complexe et source de blessure pour l'utilisateur.

De plus, lorsque l'utilisateur souhaite ranger cette tente, les tiges doivent être retirées et risquent d'être égarées si elles ne sont pas stockées correctement. Elles se révèlent en outre particulièrement encombrantes une fois la tente pliée et rangée.

### Exposé de l'invention

Un but de la présente invention est de proposer une tente déployable remédiant aux problèmes précités.

Pour ce faire, l'invention porte sur une tente déployable comprenant :
- une ossature comprenant une première partie d'embase et une seconde partie d'embase montée pivotante par rapport à la première partie d'embase, autour d'un axe de pivotement, entre une position pliée dans laquelle la seconde partie d'embase repose au-dessus de la première partie d'embase, et une position dépliée dans laquelle les première et seconde parties d'embase s'étendent côte à côte dans un plan d'embase, de façon à former une embase pour la tente, l'ossature comprenant en outre au moins un premier arceau monté pivotant par rapport à au moins l'une des première et seconde parties d'embase autour d'un premier axe de rotation parallèle audit axe de pivotement, ledit premier arceau étant configuré pour s'étendre transversalement au plan d'embase lorsque l'ossature est en position dépliée et pour s'étendre entre la première partie d'embase et la seconde partie d'embase lorsque l'ossature est en position pliée;
- une toile de tente coopérant avec l'ossature comprenant :
   a. un corps de toile, comprenant au moins une première paroi de la toile de tente ;
      et
   b. au moins une première casquette délimitée du corps de toile par une ligne de liaison s'étendant entre un premier sommet latéral situé d'un premier côté de ladite première paroi et un second sommet latéral situé d'un second côté de la première paroi, opposé au premier côté, la ligne de liaison comprenant une première portion de ligne de liaison s'entendant entre un premier sommet supérieur de ladite ligne de liaison et le premier sommet latéral, et une seconde portion de ligne de liaison s'étendant entre ledit premier sommet supérieur et ledit second sommet latéral, ladite première casquette comprenant en outre un bord distal libre distant de la ligne de liaison et s'étendant entre lesdits premier et second sommets latéraux, le bord distal libre comprenant une première portion de bord s'étendant entre un premier sommet distal du bord distal libre et le premier sommet latéral et une seconde portion de bord s'étendant entre ledit premier sommet distal et le second sommet latéral, la tente comprenant en outre au moins une première armature s'étendant entre le premier sommet distal et le corps de toile, ladite première armature étant en outre articulée de manière pivotante par rapport à la première paroi de la toile de tente en au moins une première partie inférieure disposée en-dessous dudit premier sommet supérieur, de sorte que la première armature s'étend sous ladite première casquette lorsque l'ossature est dépliée, ladite première armature pouvant prendre une position déployée et une position rabattue dans laquelle elle s'étend contre le corps de toile, lorsque l'ossature est placée en position pliée,
dans laquelle, lorsque l'ossature est amenée en position dépliée, les première et seconde portions de ligne de liaison et les première et seconde portions de bord sont mises en tension et exercent un effort sur la première armature de façon à faire pivoter ladite première armature par rapport au corps de toile vers le plan d'embase, de la position rabattue jusqu'en position déployée dans laquelle elle fait saillie transversalement à la première paroi de la toile de tente de façon à déployer la première casquette par rapport au corps de toile.

De préférence, la tente selon la présente invention est une tente de toit, particulièrement adaptée pour reposer sur le toit d'un véhicule, tel qu'une voiture ou une camionnette, sans l'endommager. La tente peut également être disposée sur un sol, par exemple en extérieur, et notamment sur un sol accidenté.

Ladite tente s'étend avantageusement selon une direction longitudinale et présente des première et seconde extrémités longitudinales.

Les première et seconde parties d'embase sont configurées pour reposer sur ledit toit ou sur ledit sol. De préférence, l'axe de pivotement de la seconde partie d'embase par rapport à la première partie d'embase s'étend parallèlement à la surface sur laquelle repose la tente, et encore de préférence horizontalement. Le plan d'embase s'étend avantageusement horizontalement.

De préférence, le premier arceau est monté pivotant par rapport à la première partie d'embase ou à la seconde partie d'embase autour dudit axe de pivotement de la seconde partie d'embase par rapport à la première partie d'embase. Le premier arceau est de préférence monté pivotant par rapport aux première et seconde parties d'embase.

De manière non-limitative, ledit premier arceau présente avantageusement une première extrémité montée pivotante par rapport à un premier bord latéral de ladite première ou seconde partie d'embase et une seconde extrémité montée pivotante par rapport à un second bord latéral de ladite première ou seconde partie d'embase, opposé audit premier bord latéral.

Le pivotement de la seconde partie d'embase par rapport à la première partie d'embase entraine le pivotement du premier arceau par rapport à la première partie d'embase ou à la seconde partie d'embase, par exemple compte-tenu du patronage de la toile de tente coopérant avec ledit arceau et lesdites parties d'embase.

Avantageusement, l'ossature, comprenant lesdites première et seconde parties d'embase ainsi que ledit au moins un premier arceau, se déplie à la manière d'un éventail.

Le premier arceau présente avantageusement la forme d'un « U » et comprend une première partie latérale, une seconde partie latérale et une partie centrale reliant les première et seconde parties latérales.

De préférence, le corps de toile et/ou la première casquette sont souples. Ils peuvent avantageusement être roulés.

Réciproquement, le corps de toile coopère avec l'ossature, et notamment au moins avec ledit premier arceau, de sorte que ledit corps de toile est mis en tension lorsque ladite ossature est placée en position dépliée, de manière à former un volume intérieur de la tente où peut s'abriter l'utilisateur.

La première paroi peut être une paroi latérale de la tente, c'est-à-dire une paroi transversale à l'axe de pivotement de la seconde partie d'embase par rapport à la première partie d'embase. Alternativement, la première paroi peut être une paroi avant ou arrière de la tente, c'est-à-dire une paroi parallèle audit axe de pivotement.

La ligne de liaison est formée à l'interface entre le corps de toile et la première casquette. De préférence, la première casquette est reliée au corps de toile par la ligne de liaison. Encore de préférence, mais de manière non limitative, la première casquette est reliée au corps de toile sur toute la longueur de la ligne de liaison. La ligne de liaison forme avantageusement un bord non-libre de la première casquette. La ligne de liaison peut comprendre plusieurs portions et plusieurs arrêtes, formant éventuellement un angle entre-elles. La ligne de liaison peut être courbe ou rectiligne.

Le bord distal libre de la casquette n'est avantageusement pas relié au corps de toile. Il peut comprendre plusieurs portions et plusieurs arrêtes, formant éventuellement un angle entre-elles. Le bord distal libre peut être courbe ou rectiligne.

Le premier sommet supérieur est formé sur la ligne de liaison. La première casquette est de préférence reliée au corps de toile au moins au niveau dudit premier sommet supérieur. La première casquette peut être disposée au-dessus d'une fenêtre ou d'une entrée de la tente.

Avantageusement, le premier sommet latéral s'étend à proximité d'un premier coin inférieur de la première paroi de la tente, tandis que le second sommet latéral s'étend à proximité d'un second coin inférieur de la première paroi de la tente, opposé au premier coin inférieur.

La première armature est avantageusement rigide. De manière non limitative, elle peut être en matériau plastique, métallique, en bois ou encore en matériau composite. Elle peut être légèrement flexible. La première armature est avantageusement fixée au bord distal libre de la casquette, au niveau du premier sommet distal.

Lorsque l'ossature est en position pliée, correspondant à une position de rangement de la tente, le corps de toile et la première casquette s'étendent entre la première partie d'embase et la seconde partie d'embase. Ils ne sont pas mis en tension et sont avantageusement roulés. Ladite première armature est en position rabattue et s'étend également entre lesdites première et seconde parties d'embase. Dans la position rabattue, la première armature s'étend avantageusement le long du premier arceau. Lorsque l'armature est en position pliée, ladite première armature ne s'étend avantageusement pas au-delà des bords des première et seconde parties d'embase.

Grâce à l'invention, lorsque l'ossature est pliée, ladite première armature peut être maintenue en coopération avec la toile de tente, ce qui réduit les risques d'égarer ladite première armature. Dans la position rabattue, ladite première armature présente en outre un encombrement réduit, limitant la place occupée par la tente une fois rangée. Elle s'étend de préférence au-dessus de la première partie inférieure.

De préférence, mais de manière non limitative, la première armature est montée à la première paroi de la tente et/ou au bord distal libre de la première casquette de manière détachable. Avantageusement, la première armature est disposée dans un fourreau, par exemple un fourreau de tissu. Un intérêt est de protéger ladite première armature, tout en réduisant le risque de blessure pour l'utilisateur.

Pour déployer la tente, il convient d'amener l'ossature en position dépliée. Pour ce faire, l'utilisateur fait pivoter la seconde partie d'embase par rapport à la première partie d'embase, autour de l'axe de pivotement. Ceci entraine le pivotement du premier arceau par rapport à la première partie d'embase ou à la seconde partie d'embase, jusqu'à s'étendre transversalement au plan d'embase, sans que l'utilisateur n'intervienne sur ledit premier arceau.

De préférence, mais de manière non limitative, la tente comprend une échelle montée pivotante par rapport à la seconde partie d'embase, sous ladite seconde partie d'embase. L'échelle permet à l'utilisateur de faire pivoter la seconde partie d'embase par rapport à la première partie d'embase en utilisant l'échelle comme un levier. En faisant basculer l'échelle, la seconde partie d'embase est entrainé en rotation par rapport à la première partie d'embase.

Dans la position pliée de l'ossature, l'échelle repose avantageusement contre la seconde partie d'embase, et plus précisément contre une face inférieure de la seconde partie d'embase destinée à reposer sur ledit sol ou ledit toit d'un véhicule.

Ladite échelle est avantageusement télescopique.

Lorsque l'ossature est amenée de la position pliée à la position dépliée, le corps de toile coopérant avec au moins le premier arceau est mis en tension de sorte qu'il forme ladite au moins une première paroi et définit le volume intérieur de la tente. Le premier sommet latéral et le second sommet latéral sont avantageusement écartés l'un de l'autre. En outre, la distance séparant le premier sommet supérieur et le premier sommet latéral, ainsi que la distance séparant le premier sommet supérieur et le second sommet latéral augmentent. En conséquence, la ligne de liaison et donc les première et seconde portions de ligne de liaison sont mises en tension et forment des lignes de tension pour la première casquette. De même, la distance séparant le premier sommet distal et le premier sommet latéral, ainsi que la distance séparant le premier sommet distal et le second sommet latéral augmentent. Le bord distal libre, et plus précisément les première et seconde portions de bord, sont par conséquent également mis en tension et forment des lignes de tension pour la première casquette.

Les première et seconde portions de ligne de liaison et les première et seconde portions de bord, mises en tension, exercent alors un effort sur la première armature, au niveau du premier sommet distal. Compte-tenu de cet effort, la première armature est amenée depuis sa position rabattue vers sa position déployée par pivotement par rapport au corps de toile. La première armature est abaissée et pivote vers le bas, en direction du plan d'embase. De même, le premier sommet distal est rapproché du plan d'embase

Dans cette position déployée, la première armature s'étend transversalement à la première paroi de la tente et prend appui sur ladite première paroi de la tente. Elle exerce sur la première casquette un effort dirigé vers l'extérieur de la tente qui tend et déploie ladite casquette. Cet effort est exercé selon la direction de ladite première armature. Il permet en outre de maintenir la première casquette en position déployée dans laquelle elle fait saillie par rapport à la première paroi et permet de protéger l'utilisateur de la pluie ou du soleil.

En outre, le premier sommet distal est maintenu sensiblement immobile par rapport au corps de toile par la première armature. Les efforts exercés sur la première armature par les première et seconde portions de ligne de liaison et les première et seconde portions de bord permettent de maintenir efficacement ladite première armature en position déployée. Un intérêt est notamment de maintenir la casquette déployée malgré le vent.

Grâce à l'invention, la mise en position dépliée de l'ossature permet de déployer la première casquette sans intervention supplémentaire de l'utilisateur. L'invention permet de s'affranchir d'une étape de mise en place manuelle de tiges métalliques pour supporter la ou les casquettes, facilitant et réduisant ainsi le temps d'installation de la tente et notamment la mise en forme des casquettes de la tente. Les risques pour l'utilisateur de se blesser lors de l'installation de la tente sont également réduits.

Dans la position dépliée de l'ossature, le premier sommet supérieur s'étend avantageusement dans un plan comprenant la première paroi de la tente. La première partie inférieure s'étend de préférence sensiblement à la verticale du premier sommet supérieur, sous ledit premier sommet supérieur.

Lorsqu'elle est déployée, les dimensions transversales de la première casquette considérées entre le premier sommet supérieur et le premier sommet distal sont avantageusement inférieures à la longueur de la première casquette considérée entre les premier et second sommets latéraux, de préférence au moins deux fois inférieures.

Lorsqu'elle est montée sur le toit d'un véhicule, la tente s'étend avantageusement en porte-à-faux par rapport audit toit lorsqu'elle est en position déployée. De préférence, l'échelle forme alors une béquille pour la tente, supportant la seconde partie d'embase.

De manière avantageuse, la première armature s'étend perpendiculairement à la première paroi de la tente lorsqu'elle est placée en position déployée, grâce à quoi l'effort exercé par la première casquette sur la première armature, ainsi que l'effort relatif exercé par la première paroi de tente sur la première armature sont dirigés perpendiculairement à la première paroi de la tente sur laquelle prend appui la première armature. Ces efforts tendent à maintenir ladite première armature en position déployée, empêchant d'autant plus efficacement qu'elle ne se replie de manière intempestive, par exemple en cas de vent.

De préférence, les première et seconde parties d'embase présentent la forme de plaques définissant un plancher pour la tente lorsque l'ossature est en position dépliée. Un intérêt est de protéger l'utilisateur d'un contact direct avec le terrain ou le toit sur lequel repose la tente. Ceci permet notamment à l'utilisateur de disposer son matelas sur une surface régulière, formée par lesdites parties d'embase. Ceci réduit en outre le passage de l'humidité provenant de la surface sur laquelle repose la tente. Le confort de l'utilisateur est donc amélioré.

Avantageusement, l'axe de pivotement de la seconde partie d'embase par rapport à la première partie d'embase est confondu avec le premier axe de rotation du premier arceau par rapport à au moins l'une des première et seconde parties d'embase. L'ossature de déplie par conséquent à la manière d'un éventail.

De manière avantageuse, l'ossature comprend en outre un deuxième arceau monté pivotant par rapport à au moins l'une des première et seconde parties d'embase autour d'un deuxième axe de rotation parallèle audit axe de pivotement, ledit deuxième arceau s'étendant entre le premier arceau et le plan d'embase, lorsque l'ossature est en position dépliée.

Ce deuxième arceau permet de définir un volume intérieur de la tente plus important, améliorant le confort de l'utilisateur. Le deuxième arceau est avantageusement configuré pour s'étendre transversalement au plan d'embase lorsque l'ossature est en position dépliée et pour s'étendre entre la première partie d'embase et la seconde partie d'embase lorsque l'ossature est en position pliée.

Dans cette position dépliée de l'ossature, le deuxième arceau est de préférence incliné par rapport au plan d'embase, de préférence d'un angle compris entre 15° et 80°. De préférence, le deuxième arceau est monté pivotant par rapport à la seconde partie d'embase et est incliné par rapport à cette seconde partie d'embase lorsque l'ossature est dépliée.

Préférentiellement, ladite première armature comprend au moins une tige s'étendant entre le premier sommet distal du bord distal libre de la première casquette et la première partie inférieure, ladite tige étant articulée de manière pivotante par rapport au corps de toile.

Ladite tige comprend une première extrémité connectée à la première casquette au niveau du premier sommet distal et une seconde extrémité articulée par rapport au corps de toile au niveau de la première partie inférieure. Ladite tige est de longueur constante. Sa longueur est choisie de manière à permettre la mise en tension de la première casquette lorsqu'elle est en position déployée.

De préférence, la première armature s'étend le long dudit premier arceau lorsque l'ossature est en position pliée. Un intérêt est de réduire l'encombrement de la tente une fois rangée. On comprend que ladite première armature ne fait alors plus saillie transversalement à la première paroi.

De manière avantageuse, la première casquette est fixée au corps de toile sur sensiblement toute la longueur de la ligne de liaison, par exemple par couture. Un intérêt est de s'affranchir d'une étape de connexion de la première casquette au corps de toile, facilitant l'installation de la tente. Un autre intérêt est d'éviter que la pluie ne s'infiltre entre la première casquette et la première paroi de la tente.

Préférentiellement, la première casquette est mise sous tension entre ledit premier sommet supérieur et ledit au moins un premier sommet distal, lorsque ladite première armature est amenée en position déployée. En d'autres mots, une ligne de tension est formée entre ledit premier sommet supérieur et ledit premier sommet distal. Un intérêt est de tendre plus efficacement la casquette entre ces deux sommets afin d'améliorer le ruissèlement de la pluie sur ladite première casquette. Ceci permet en outre d'éviter que la première casquette ne forme une cuvette où la pluie pourrait s'accumuler.

Selon un aspect particulièrement avantageux de l'invention, la première portion de ligne de liaison comprend une première arrête proximale s'étendant entre le premier sommet supérieur et un deuxième sommet supérieur, distant du premier sommet supérieur, ainsi qu'une seconde arrête proximale s'étendant entre ledit deuxième sommet supérieur et ledit premier sommet latéral, et dans laquelle la première portion de bord comprend une première arrête distale s'étendant entre ledit premier sommet distal et un deuxième sommet distal du bord distal libre, distant du premier sommet distal, et une seconde arrête distale s'étendant entre ledit deuxième sommet distal et le premier sommet latéral, la tente comprenant en outre une deuxième armature s'étendant entre le deuxième sommet distal et le corps de toile, la deuxième armature étant en outre articulée de manière pivotante par rapport à la première paroi de la toile de tente en au moins une deuxième partie inférieure disposée en-dessous dudit deuxième sommet supérieur, de sorte que la deuxième armature s'étend sous ladite première casquette lorsque l'ossature est dépliée, ladite deuxième armature pouvant prendre une position déployée et une position rabattue dans laquelle elle s'étend contre le corps de toile, lorsque l'ossature est placée en position pliée, dans laquelle lorsque l'ossature est amenée en position dépliée, les première et seconde arrêtes proximales de la première portion de ligne de liaison et les première et seconde arrêtes distales de la première portion de bord sont mises en tension et exercent un effort sur la deuxième armature de façon à faire pivoter ladite deuxième armature par rapport au corps de toile vers le plan d'embase de la position rabattue jusqu'en position déployée dans laquelle elle fait saillie transversalement à la première paroi de la toile de tente de façon à déployer la première casquette par rapport au corps de toile. La deuxième armature exerce un effort supplémentaire sur la première casquette, au niveau du deuxième sommet distal, permettant de tendre plus efficacement ladite première casquette afin d'améliorer l'abri formé. Ladite deuxième armature permet en outre de maintenir plus solidement la casquette en position déployée, afin notamment de résister plus efficacement au vent.

La deuxième armature est avantageusement sensiblement identique à la première armature et pivote de manière similaire par rapport au corps de toile lorsque l'ossature est amenée en position dépliée. La première partie inférieure et la deuxième partie inférieure sont distantes l'une de l'autre. La première armature et la deuxième armature s'étendent avantageusement parallèlement l'une par rapport à l'autre lorsqu'elles sont en position déployée. La deuxième armature est avantageusement de même longueur que la première armature, ou légèrement plus courte.

De manière non limitative, la tente pourrait comprendre une troisième armature.

De manière avantageuse, le corps de toile comprend une partie principale coopérant au moins avec ledit premier arceau de manière à former un volume intérieur de la tente et une partie de toit, connectée à la partie principale, ladite première casquette étant reliée à ladite partie de toit. Dans cette configuration non-limitative, le corps de toile est donc en deux parties, connectées entre-elles. Ladite partie de toit forme un sur-toit, également appelé double-toit, pour la tente. Un intérêt est d'améliorer l'étanchéité de la tente tout en conservant la possibilité de former une casquette. De manière non-limitative, la première casquette et la partie de toit peuvent former une seule et même pièce.

Préférentiellement, mais de manière non-limitative, les dimensions transversales de la première casquette, considérés entre le premier sommet supérieur et le premier sommet distal sont supérieures à la longueur de la première armature, considérée entre la première partie inférieure et le premier sommet distal. Le premier sommet supérieur, la première partie inférieure et le premier sommet distal définissent alors avantageusement un triangle, de préférence un triangle rectangle dont l'hypoténuse est la longueur entre le premier sommet supérieur et le premier sommet distal. Cette configuration permet un meilleur maintien de la première armature en position déployée et assure une meilleure tension de la première casquette entre le premier sommet supérieur et le premier sommet distal.

Selon un premier mode de réalisation avantageux, ladite première paroi de la toile de tente est une paroi latérale s'étendant transversalement par rapport à l'axe de pivotement de la seconde partie d'embase par rapport à la première partie d'embase. Ladite première paroi s'étend alors depuis un bord latéral de l'embase. La première casquette forme alors une casquette latérale pour la tente.

Lorsque l'ossature est pliée, les premier et second sommets latéraux sont proches l'un de l'autre. Lorsque l'ossature est dépliée, les premier et second sommets latéraux sont écartés l'un de l'autre, permettant la mise en tension de la ligne de liaison et du bord distal libre et la mise en position déployée de la première armature.

De préférence, la première armature pivote par rapport à la première paroi de la toile de tente dans un plan contenant le premier arceau. La première armature pivote avantageusement autour d'un axe parallèle au plan d'embase.

De manière avantageuse, le premier sommet latéral et le second sommet latéral s'étendent de part et d'autre du premier arceau.

De préférence, le premier sommet latéral et le second sommet latéral sont disposés à proximité des extrémités longitudinales de la tente. Un intérêt est d'augmenter les dimensions de la première casquette considérées selon la direction longitudinale de la tente, afin d'offrir un plus grand abri pour l'utilisateur.

Selon un second mode de réalisation avantageux, ladite première paroi de la toile de tente est une paroi avant ou arrière s'étendant sensiblement parallèlement audit axe de pivotement de la seconde partie d'embase par rapport à la première partie d'embase.

La première casquette forme alors une casquette arrière ou une casquette avant pour la tente, surplombant par exemple une ouverture formant une entrée de la tente.

De manière avantageuse, les première et deuxième armatures forment une seule et même pièce. Les première et deuxième armatures pivotent donc conjointement par rapport au corps de tente et sont donc amenées simultanément en position déployée ou en position rabattue. Un intérêt est de maintenir d'autant plus solidement la casquette en position déployée.

De préférence, la tente comprend un élément de mise en tension comprenant lesdites première et deuxième armatures.

De préférence, les première et deuxième armatures sont reliées entre elles par une portion de connexion, ladite portion de connexion coopérant avec le bord distal libre de la première casquette entre le premier sommet distal et le deuxième sommet distal. La portion de connexion permet de rigidifier le bord distal libre de la première entre le premier sommet distal et le deuxième sommet distal. Ceci permet d'éviter qu'il ne s'affaisse en cas de pluie ou si un utilisateur s'appuie dessus.

De préférence, les première et deuxième armatures et la portion de connexion forment un élément de mise en tension ayant la forme d'un « U », les première et deuxième armatures formant les branches du « U » tandis que la portion de connexion forme la base du « U »

Préférentiellement, une ouverture est ménagée dans ladite première paroi de la tente, ladite première casquette s'étendant au-dessus de ladite ouverture.

De manière avantageuse, la tente comprend en outre au moins une deuxième paroi qui est transversale à la première paroi et s'étend sensiblement parallèlement audit axe de pivotement de la seconde partie d'embase par rapport à la première partie d'embase, la toile de tente comprenant en outre au moins une deuxième casquette délimitée du corps de toile par une ligne de liaison s'étendant entre un premier sommet latéral situé d'un premier côté de ladite deuxième paroi et un second sommet latéral situé d'un second côté de la deuxième paroi, opposé au premier côté, la ligne de liaison comprenant une première portion de ligne de liaison s'entendant entre un premier sommet supérieur de ladite ligne de liaison et le premier sommet latéral, et une seconde portion de ligne de liaison s'étendant entre ledit premier sommet supérieur et ledit second sommet latéral, ladite deuxième casquette comprenant en outre un bord distal libre distant de la ligne de liaison et s'étendant entre lesdits premier et second sommets latéraux, le bord distal libre comprenant une première portion de bord s'étendant entre un premier sommet distal du bord distal libre et le premier sommet latéral et une seconde portion de bord s'étendant entre ledit premier sommet distal et le second sommet latéral, la tente comprenant en outre au moins une première armature secondaire s'étendant entre le premier sommet distal de la deuxième casquette et le corps de toile, ladite première armature secondaire étant en outre articulée de manière pivotante par rapport à la deuxième paroi de la toile de tente en au moins une première partie inférieure disposée en-dessous dudit premier sommet supérieur, de sorte que la première armature secondaire s'étend sous ladite deuxième casquette, ladite première armature secondaire pouvant prendre une position déployée et une position rabattue dans laquelle elle s'étend contre le corps de toile, lorsque l'ossature est placée en position pliée, dans laquelle lorsque l'ossature est amenée en position dépliée, les première et seconde portions de ligne de liaison et les première et seconde portions de bord de la deuxième casquette sont mises en tension et exercent un effort sur la première armature secondaire de façon à faire pivoter ladite première armature secondaire par rapport au corps de toile vers le plan d'embase de la position rabattue jusqu'en position déployée dans laquelle elle fait saillie transversalement à la deuxième paroi de la toile de tente de façon à déployer la deuxième casquette par rapport au corps de toile.

Dans cette variante, la tente comprend donc deux casquettes, l'une s'étendant depuis la première paroi, formant une paroi latérale de la tente, tandis que l'autre s'étend depuis la deuxième paroi, formant une paroi avant ou arrière de la tente. Les deux casquettes sont déployées lorsque l'ossature est dépliée.

### Brève description des dessins

L'invention sera mieux comprise à la lecture de la description qui suit de modes de réalisation de l'invention donnés à titre d'exemples non limitatifs, en référence aux dessins annexés, sur lesquels :
[Fig. 1]La figure **1** illustre un premier mode de réalisation d'une tente selon l'invention, l'ossature étant en position pliée ;
[Fig. 2]La figure **2** illustre la tente de la figure **1****,** l'ossature étant en cours de dépliage ;
[Fig. 3]La figure **3** illustre l'ossature de la tente de la figure **1****,** en position dépliée ;
[Fig. 4]La figure **4** illustre la tente de la figure **1****,** l'ossature étant en position dépliée ;
[Fig. 5]La figure **5** illustre la tente de la figure **4****,** sous un autre angle de vue ;
[Fig. 6]La figure **6** illustre un deuxième mode de réalisation d'une tente selon l'invention, l'ossature étant en position dépliée ;
[Fig. 7]La figure **7** illustre la tente de la figure **6****,** sous un autre angle de vue ; et
[Fig. 8]La figure **8** illustre un troisième mode de réalisation d'une tente selon l'invention.

### Description des modes de réalisation

L'invention porte sur une tente déployable munie d'au moins une casquette déployable.

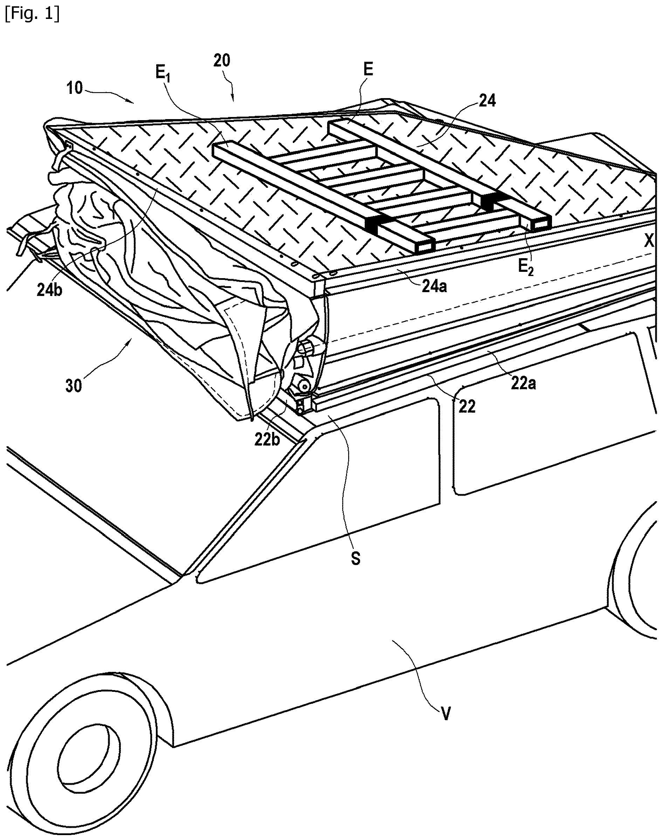

Nous allons décrire un premier mode de réalisation d'une tente selon l'invention à l'aide des figures **1** à **5****.** La figure **1** illustre un premier mode de réalisation d'une tente déployable **10** selon l'invention configurée pour être disposée sur une surface **S** pouvant être un sol ou le toit d'un véhicule. Sur cette figure **1****,** la tente repose sur le toit **S** d'un véhicule **V,** en l'espèce une voiture, et est dans une position de rangement.

Selon l'invention, la tente **10** comprend une ossature **20** et une toile de tente **30** configurée pour coopérer avec l'ossature. Dans cet exemple non-limitatif, l'ossature comprend une première partie d'embase **22** et une seconde partie d'embase **24** montée pivotante par rapport à la première partie d'embase autour d'un axe de pivotement **X.**

Les première et seconde parties d'embase **22,24** présentent la forme d'une plaque rigide et sont sensiblement identiques. La seconde partie d'embase a un bord avant **24a,** monté pivotant par rapport à un bord avant **22a** de la première partie d'embase **22.** Lorsque la tente **10** repose sur ledit toit **S,** ledit axe de pivotement **X** s'étend horizontalement, parallèlement audit toit.

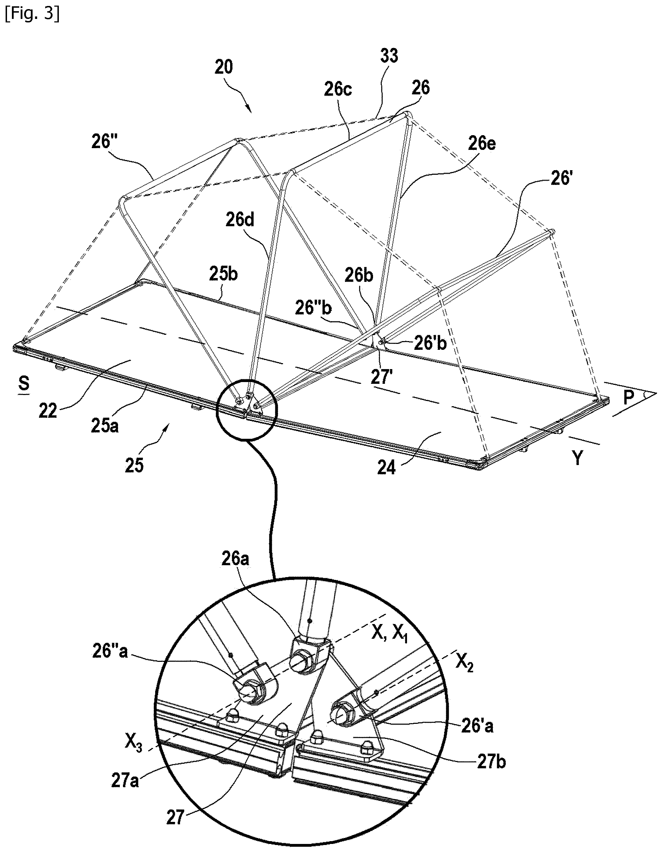

L'ossature comprend par ailleurs un premier arceau **26,** un deuxième arceau **26'** et un troisième arceau **26",** visibles en figure **3****,** chacun étant monté pivotant par rapport à l'une des première et seconde parties d'embase **22,24.**

La toile de tente **30** coopère avec l'ossature **20** et est fixée aux première et seconde parties d'embase **22,24.**

Dans cet exemple non-limitatif, la tente est en outre munie d'une échelle **E** télescopique présentant une première extrémité **E₁** montée de manière pivotante sous la seconde partie d'embase **24.** L'échelle comprend en outre une deuxième extrémité **E₂** formant une extrémité libre de l'échelle.

Lorsque la tente **10** est en position de rangement, illustrée en figure **1****,** l'ossature **20** est en position pliée. La seconde partie d'embase **24** repose au-dessus de la première partie d'embase **22,** sensiblement parallèlement à ladite première partie d'embase. La toile de tente **30** n'est pas mise en tension et s'étend entre lesdites première et seconde partie d'embase **22,24.** De même, les premier, deuxième et troisième arceaux **26,26',26"** s'étendent entre les première et seconde parties d'embase, les uns contre les autres et parallèlement les uns par rapport aux autres. L'échelle **E** s'étend en outre contre la seconde partie d'embase **24** et est en position escamotée, de sorte qu'elle présente une longueur réduite.

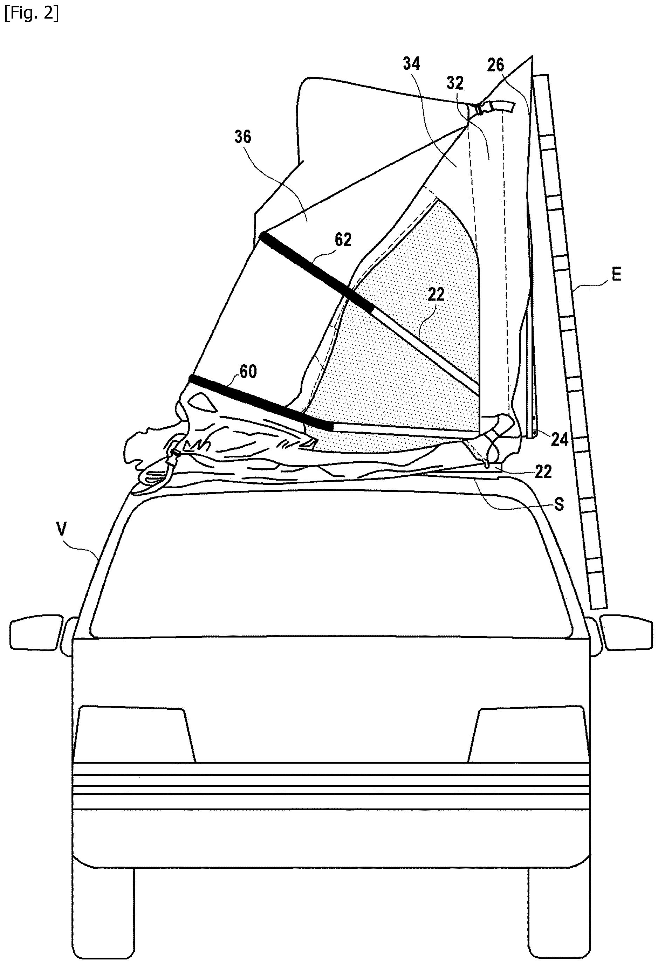

Pour placer la tente en position d'utilisation, l'utilisateur déplie l'ossature **20** en faisant pivoter la seconde partie d'embase **24** par rapport à la première partie d'embase **22,** autour de l'axe de pivotement **X,** tel qu'illustré en figure **2****.** Dans cet exemple non-limitatif, l'utilisateur déploie en premier lieu l'échelle télescopique **E** afin d'augmenter sa longueur, l'échelle s'étendant alors horizontalement et en porte-à-faux par rapport au toit du véhicule. L'utilisateur tire ensuite sur l'extrémité libre **E₂** de l'échelle, en direction du sol sur lequel repose le véhicule **V,** afin de faire basculer l'échelle vers une position sensiblement verticale. L'échelle joue alors le rôle d'un levier et entraine le pivotement de la seconde partie d'embase **24** par rapport à la première partie d'embase **22,** tel qu'on peut le voir sur la figure **2****.**

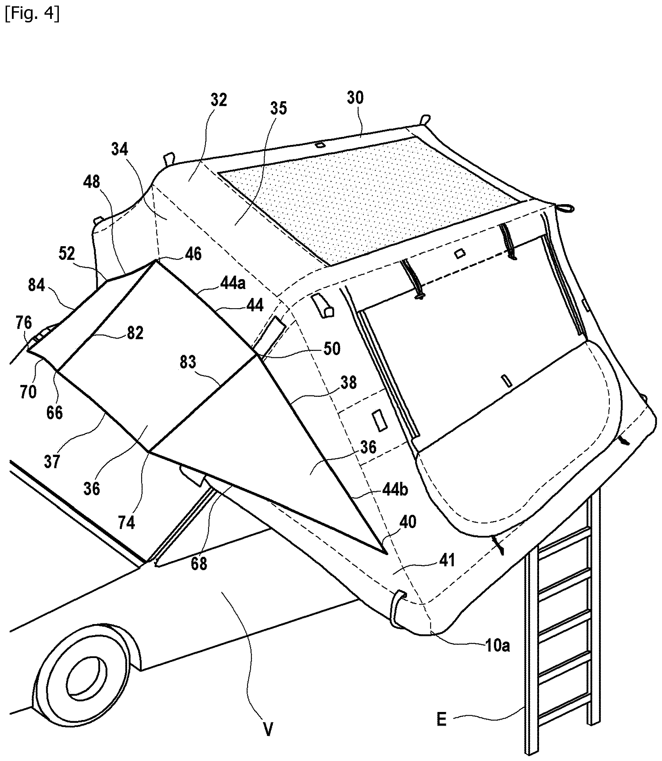

L'échelle est ensuite tirée jusqu'à ce que son extrémité libre **E₂** repose sur le sol. La seconde partie d'embase **24** est pivotée jusqu'à s'étendre de manière adjacente à la première partie d'embase **22,** tel qu'on peut le voir en figure **3** et en figure **4****.**

La figure **3** illustre l'ossature **20** de la tente **10** en position dépliée, la toile de tente **30** n'ayant pas été représentée pour offrir une meilleure visibilité de l'ossature **20.** Dans cette position dépliée, les première et seconde parties d'embase **22,24** s'étendent côte à côte dans un même plan d'embase **P** de façon à former une embase **25** et un plancher pour la tente. La tente **10** s'étend alors selon une direction longitudinale **Y.**

Sur cette figure **3****,** on constate que l'ossature comprend une première platine **27** montée à un premier bord longitudinal **25a** de l'embase. La première platine **27** comprend une première partie de platine **27a** solidaire de la première partie d'embase **22** et une seconde partie de platine **27b** solidaire de la seconde partie d'embase **24.** La seconde partie de platine **27b** est montée pivotante par rapport à la première partie de platine **27a** autour de l'axe de pivotement **X.** L'ossature comprend en outre une seconde platine **27'** montée à un second bord longitudinal **25b** de l'embase **25.** La seconde platine **27'** comprend également une première partie de platine et une seconde partie de platine montée pivotante par rapport à la première partie de platine autour de l'axe de pivotement **X.** Lesdites première et seconde platines **27,27'** permettent le montage pivotant de la seconde partie d'embase **24** par rapport à la première partie d'embase **22.**

Les premier, deuxième et troisième arceaux **26,26',26"** sont identiques. Chacun desdits arceaux **26,26',26"** s'étend entre le premier bord latéral **25a** et le second bord latéral **25b** de l'embase **25.** Les arceaux présentent la forme d'un « U » et comprennent chacun une première extrémité **26a,26'a,26"a** montée pivotante par rapport au premier bord latéral **25a** de l'embase **25,** ainsi qu'une seconde extrémité **26b,26'b,26"b,** opposée à la première extrémité, montée pivotante par rapport au second bord latéral **25b** de l'embase. Ils comprennent en outre chacun une première partie latérale **26d,** une seconde partie latérale **26e** et une partie centrale **26c** reliant les première et seconde parties latérales.

Le premier arceau **26** est monté pivotant par rapport aux première et seconde parties d'embase **22,24** autour d'un premier axe de rotation **X,** confondu avec l'axe de pivotement **X.** Plus précisément, la première extrémité **26a** du premier arceau **26** est montée pivotante sur les première et seconde parties **27a,27b** de la première platine **27** et la seconde extrémité **26b** du premier arceau **26** est montée pivotante sur les première et seconde parties de la seconde platine **27'** selon le premier axe de rotation **X₁**.

Le deuxième arceau **26'** est monté pivotant par rapport à la seconde partie d'embase **24** autour d'un deuxième axe de rotation **X₂** parallèle à l'axe de pivotement **X.** Plus précisément, la première extrémité **26'a** du deuxième arceau **26'** est montée pivotante par rapport à la seconde partie **27b** de la première platine **27** et la seconde extrémité **26'b** du deuxième arceau **26'** est montée pivotante par rapport à la seconde partie de la seconde platine **27'** selon le deuxième axe de rotation **X₂.**

Le troisième arceau **26"** est monté pivotant par rapport à la première partie d'embase autour d'un troisième axe de rotation **X₃** parallèle à l'axe de pivotement **X.** Plus précisément, la première extrémité **26"a** du troisième arceau **26"** est montée pivotante par rapport à la première partie **27a** de la première platine **27** et la seconde extrémité **26"b** du troisième arceau **26"** est montée pivotante par rapport à la première partie de la seconde platine **27',** selon le troisième axe de rotation **X₃.**

Tel qu'illustré en figure **4****,** lorsque l'ossature **20** est dépliée, la tente s'étend en porte-à-faux depuis le toit **S** du véhicule **V,** de sorte que seule la première partie d'embase **22** repose sur le toit, tandis que la seconde partie d'embase **24** ne repose pas sur ledit toit. L'échelle **E** repose alors sur le sol et forme une béquille configurée pour supporter ladite seconde partie d'embase et donc en partie la tente.

Comme on peut également le voir en figure **4****,** la toile de tente **30** comprend un corps de toile **32** qui coopère avec l'ossature **20.** Plus précisément, le corps de toile **32** comprend une partie principale **35** fixée à la première partie d'embase **22,** à la seconde partie d'embase **24,** et est connectée aux premier **26,** deuxième **26'** et troisième **26"** arceaux.

Lorsque l'ossature **20** est amenée de la position pliée à la position dépliée par pivotement de la seconde partie d'embase **24** par rapport à la première partie d'embase **22,** le corps de toile **32** est mis en tension, de par sa coopération avec les arceaux et avec les parties d'embase. En conséquence, des lignes de tension **33** sont formées sur le corps de toile **32,** respectivement entre la seconde partie d'embase **24** et le deuxième arceau **26',** entre le deuxième arceau **26'** et le premier arceau **26,** entre le premier arceau **26** et le troisième arceau **26",** ainsi qu'entre le troisième arceau **26"** et la première partie d'embase **22.** Ces lignes de tension sont illustrées en pointillés en figure **3****.** Ces lignes de tension entrainent le pivotement des premier, deuxième et troisième arceaux autour de l'axe de pivotement **X,** jusqu'à ce qu'ils s'étendent chacun transversalement à l'embase et au plan d'embase **P.**

Dans cet exemple non limitatif, dans la position dépliée de l'ossature **20,** le premier arceau **26** s'étend sensiblement perpendiculairement au plan d'embase **P,** dans un plan sensiblement vertical. Dans cette position dépliée, le deuxième arceau **26'** s'étend entre le premier arceau **26** et le plan d'embase **P,** et plus précisément entre le premier arceau et la seconde partie d'embase **24.** De même, dans cette position dépliée, le troisième arceau **26"** s'étend entre le premier arceau **26** et le plan d'embase **P,** et plus précisément entre le premier arceau et la première partie d'embase **22.** Dans cet exemple non-limitatif, l'angle entre le premier arceau **26** et le deuxième arceau **26'** et l'angle entre le premier arceau **26** et le troisième arceau **26"** est environ égal à 45°. En outre, dans cette position dépliée de l'ossature, le deuxième arceau **26'** est incliné par rapport à la seconde partie d'embase **24,** de manière non-limitative d'un angle environ égal à 45°. De même le troisième arceau **26"** est incliné par rapport à la première partie d'embase **22,** de manière non-limitative d'un angle environ égal à 45°.

Lorsque l'ossature **20** est en position dépliée, le corps de toile **32,** et notamment la partie principale **35,** coopère avec l'ossature **20** et notamment avec les arceaux de manière à être mis en tension et définir un volume intérieur de la tente.

Dans ce premier mode de réalisation, et tel qu'illustré en figure **4****,** le corps de toile **32** comprend une première paroi **34** formant une paroi latérale de la tente **10.** Cette première paroi **34** s'étend sensiblement verticalement et perpendiculairement à l'axe de pivotement **X.** La toile de tente **30** comprend en outre une première casquette **36** qui est délimitée du corps de toile **32** par une ligne de liaison **38** s'étendant entre un premier sommet latéral **40** et un second sommet latéral **42.**

Dans cet exemple non-limitatif, la première casquette **36** est fixée au corps de toile **32** et à la première paroi **34** sur toute la longueur de la ligne de liaison **38** au moyen d'une couture continue, depuis le premier sommet latéral **40** jusqu'au second sommet latéral **42.** Le premier sommet latéral **40** est situé d'un premier côté **41** de la première paroi **34** tandis que le second commet latéral **42** est situé d'un second côté **43** de la première paroi, opposé au premier côté **41.** Dans cet exemple non-limitatif, les premier et second sommets latéraux **40,42** s'étendent de part et d'autre du premier arceau **26.** En outre, le premier sommet latéral **40** est disposé à proximité d'une première extrémité longitudinale **10a** de la tente **10** tandis que le second sommet latéral **42** est disposé à proximité d'une seconde extrémité longitudinale **10b** de la tente.

La ligne de liaison **38** comprend une première portion de ligne de liaison **44** s'entendant entre un premier sommet supérieur **46** de la ligne de liaison, et le premier sommet latéral **40.** La ligne de liaison **38** comprend en outre une seconde portion de ligne de liaison **48** s'entendant entre ledit premier sommet supérieur **46** et ledit second sommet latéral **42.**

La première portion de ligne de liaison **44** comprend une première arrête proximale **44a** s'étendant entre le premier sommet supérieur **46** et un deuxième sommet supérieur **50,** ainsi qu'une seconde arrête proximale **44b** s'étendant entre ledit deuxième sommet supérieur **50** et ledit premier sommet latéral **40.** Le deuxième sommet supérieur **50** est formé sur la ligne de liaison **38** et est distant du premier sommet supérieur **46.** Il s'étend du premier côté **41** de la première paroi **34,** légèrement plus bas que le premier sommet supérieur **46.** Il s'étend sensiblement en regard du deuxième arceau **26'.**

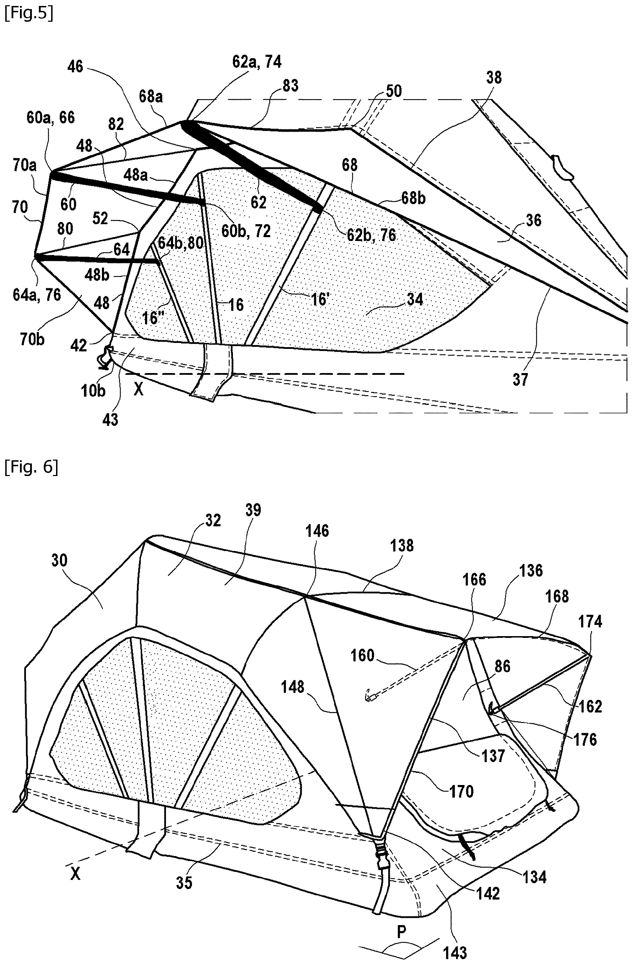

Par ailleurs, tel qu'illustré en figure **5****,** la seconde portion de ligne de liaison **48** comprend une première arrête proximale **48a** s'étendant entre le premier sommet supérieur **46** et un troisième sommet supérieur **52,** ainsi qu'une seconde arrête proximale **48b** s'étendant entre ledit troisième sommet supérieur **52** et ledit second sommet latéral **42.** Le troisième sommet supérieur **52** est distant des premier et deuxième sommets supérieurs **46,50** et s'étend du second côté **43** de la première paroi **34,** légèrement plus bas que le premier sommet supérieur **46.** Il s'étend sensiblement en regard du troisième arceau **26".**

De plus, la première casquette **36** comprend un bord distal libre **37** distant de la ligne de liaison **38** et du corps de toile **32.** Le bord distal libre **37** s'étend entre lesdits premier et second sommets latéraux **40,42.** Le bord distal libre **37** comprend une première portion de bord **68** s'étendant entre un premier sommet distal **66** du bord distal libre et le premier sommet latéral **40.** Il comprend en outre une seconde portion de bord **70** s'étendant entre ledit premier sommet distal **66** et le second sommet latéral **42.** Lesdites première et seconde portions de bord sont particulièrement visibles sur la figure **5****.**

La première portion de bord **68** comprend par ailleurs une première arrête distale **68a** s'étendant entre ledit premier sommet distal **66** et un deuxième sommet distal **74** du bord distal libre **37,** distant du premier sommet distal **66.** La première portion de bord comprend de plus une seconde arrête distale **68b** s'étendant entre ledit deuxième sommet distal **74** et le premier sommet latéral **40.** Le premier sommet distal **66** est disposé en regard du premier sommet supérieur **46.** Le deuxième sommet distal **74** est disposé en regard du deuxième sommet supérieur **50.**

La seconde portion de bord **70** comprend par ailleurs une première arrête distale **70a** s'étendant entre ledit premier sommet distal **66** et un troisième sommet distal **76** du bord distal libre **37,** distant du premier sommet distal **66.** Le troisième sommet distal **76** et le deuxième sommet distal **74** s'étendent de part et d'autre du premier sommet distal **66.** La seconde portion de bord **70** comprend de plus une seconde arrête distale **70b** s'étendant entre ledit troisième sommet distal **76** et le second sommet latéral **42.**

Selon l'invention, la tente **10** comprend une première armature **60** consistant, dans cet exemple non limitatif, en une première tige **60.** Dans cet exemple non-limitatif, l'ossature comprend en outre une deuxième armature **62** consistant en une deuxième tige **62** et une troisième armature **64** consistant en une troisième tige **64.** Lesdites armatures **60,62,64** sont rigides et de longueur constante. De manière non limitative, elles sont en outre sensiblement identiques et de même longueur. Sans sortir du cadre de l'invention, les deuxième et troisième armatures pourraient être légèrement plus courtes que la première armature. Dans cet exemple non limitatif, lesdites armatures sont placées dans un fourreau de tissu.

La première armature **60** s'étend entre le premier sommet distal **66** et le corps de toile **32,** et plus précisément, dans cet exemple non-limitatif, entre le premier sommet distal et la première paroi **34.** La première armature **60** comprend une première extrémité **60a** fixée au premier sommet distal **66** du bord distal libre **37** de la première casquette **36.** La première tige **60** comprend en outre une seconde extrémité **60b** articulée de manière pivotante à la première paroi **34** de la toile de tente **30** en regard du premier arceau **26,** en une première partie inférieure **72.** La première partie inférieure **72** est disposée en-dessous dudit premier sommet supérieur **46.**

De même, la deuxième armature **62** s'étend entre le deuxième sommet distal **74** et le corps de toile **32,** et plus précisément, dans cet exemple non-limitatif, entre le deuxième sommet distal et la première paroi **34.** La deuxième armature **62** comprend une première extrémité **62a** fixée au deuxième sommet distal **74** du bord distal libre **37** de la première casquette **36.** La deuxième armature **62** comprend en outre une seconde extrémité **62b** articulée de manière pivotante à la première paroi **34** de la tente **10** en regard du deuxième arceau **26',** en une deuxième partie inférieure **76.** La deuxième partie inférieure **76** est disposée en-dessous dudit deuxième sommet supérieur **50.**

La troisième armature **64** s'étend entre le troisième sommet distal **76** et le corps de toile **32,** et plus précisément, dans cet exemple non-limitatif, entre le troisième sommet distal et la première paroi **34.** La troisième armature **64** comprend une première extrémité **64a** fixée au troisième sommet distal **76** du bord distal libre **37** de la première casquette **36.** La troisième armature **64** comprend en outre une seconde extrémité **64b** articulée de manière pivotante à la première paroi **34** de la tente **10** en regard du troisième arceau **26",** en une troisième partie inférieure **80.** La troisième partie inférieure **80** est disposée en-dessous dudit troisième sommet supérieur **52.**

Les première, deuxième et troisième armatures **60,62,64** s'étendent sous ladite première casquette **36** lorsque l'armature **20** est en position dépliée. Les première **60,** deuxième **62** et troisième **64** armatures pivotent par rapport à la première paroi **34** respectivement dans un plan contenant le premier **26,** deuxième **26'** et troisième **26"** arceaux. Dans cet exemple non-limitatif, les première, deuxième et troisième armatures **60,62,64** sont montées de manière détachable à la première paroi **34** et à la première casquette **36.**

Considérés dans un plan perpendiculaire à l'axe de pivotement **X,** l'axe de pivotement **X,** la première partie inférieure **72** et le premier sommet supérieur **46** sont alignés. De même, considérés dans ledit plan, l'axe de pivotement **X,** la deuxième partie inférieure **76** et le deuxième sommet supérieur **50** sont alignés et l'axe de pivotement **X,** la troisième partie inférieure **80** et le troisième sommet supérieur **52** sont alignés.

Dans la position pliée de l'ossature **20,** illustrée en figure **1****,** et tel qu'on peut le voir dans la position intermédiaire de la figure **2****,** les première, deuxième et troisième armatures **60,62,64** sont en position rabattue et s'étendent le long du corps de toile **32.** Le corps de toile **32** étant en partie transparent, on constate également en figure **2** que les première, deuxième et troisième armatures **60,62,64** s'étendent respectivement le long des premier, deuxième et troisième arceaux **26,26',26",** bien que le corps de toile les sépare.

Lorsque l'utilisateur fait pivoter la seconde partie d'embase **24** de manière à amener l'ossature **20** en position dépliée, tel qu'illustré par le passage de la figure **1** à la figure **3****,** via la position intermédiaire de la figure **2****,** le corps de toile **32** est mis en tension et la distance entre les premier et second sommets latéraux **40,42** augmente. En conséquence, les première et seconde portions de ligne de liaison **44,48** ainsi que les première et seconde portions de bord **68,70** sont mises en tension. Plus précisément, les premières **44a,48a** et secondes **44b,48b** arrêtes proximales des première et seconde portions de ligne de liaison **44,48,** ainsi que les premières **68a,70a** et secondes **68b,70b** arrêtes distales des première et seconde portions de bord **68,70** sont mises en tension et définissent des lignes de tension. Ces lignes de tension peuvent être rectilignes ou courbes.

Les première et seconde portions de ligne de liaison **44,48** ainsi que les première et seconde portions de bord **68,70** mises en tension exercent un effort sur la première extrémité **60a** de la première armature **60.** La première armature **60** pivote alors par rapport au corps de toile **32** vers le plan d'embase **P,** de la position rabattue des figures **1** et **2** jusque dans la position déployée de la figure **3****.** Dans la position déployée, la première armature **60** fait saillie transversalement à la première paroi **34** de la toile de tente.

De même, les première et seconde arrêtes proximales **44a,44b** de la première portion de ligne de liaison **44** ainsi que les première et seconde arrêtes distales **68a,68b** de la première portion de bord **68** mises en tension exercent un effort sur la première extrémité **62a** de la deuxième armature **62.** La deuxième armature **62** pivote par rapport au corps de toile **32** vers le plan d'embase **P,** de la position rabattue jusque dans la position déployée dans laquelle elle fait saillie transversalement à la première paroi **34** de la toile de tente. Les première et seconde arrêtes proximales **48a,48b** de la seconde portion de ligne de liaison **48** ainsi que les première et seconde arrêtes distales **70a,70b** de la seconde portion de bord **70** mises en tension exercent un effort sur la première extrémité **64a** de la troisième armature **64.** La troisième armature **64** pivote par rapport au corps de toile **32** vers le plan d'embase **P,** de la position rabattue jusque dans la position déployée dans laquelle elle fait saillie transversalement à la première paroi **34** de la toile de tente.

De manière non-limitative, les première, deuxième et troisième armatures **60,62,64** pivotent sensiblement simultanément vers la position déployée.

Dans cet exemple non limitatif, dans la position déployée, les première, deuxième et troisième armatures **60,62,64** s'étendent perpendiculairement à la première paroi **34** de la tente **30.** Chacune de ces armatures prend appui sur la première paroi **34** de la tente et exerce un effort sur la première casquette **36,** au niveau des premier **66,** deuxième **74** et troisième **76** sommets distaux, respectivement. Ces efforts sont dirigés selon lesdites armatures, perpendiculairement à la première paroi **34** et orientés vers l'extérieur du volume intérieur de la tente. Ces efforts exercés par les première, deuxième et troisième armatures permettent de soulever la première casquette **36** et de la déployer. La première casquette **36** déployée s'étend en saillie depuis la première paroi **34.** La première casquette **36** est en outre mise en tension, notamment entre le premier sommet supérieur **46** et le premier sommet distal **66,** entre le deuxième sommet supérieur **50** et le deuxième sommet distal **74** et entre le troisième sommet supérieur **52** et le premier sommet distal **76** où trois lignes de tension **82,83,84** sont formées respectivement.

La première casquette **36** est donc déployée automatiquement lorsque l'ossature **20** est dépliée, sans que l'utilisateur n'ait besoin d'installer ou déplier manuellement les armatures.

Dans la position déployée, lesdites première, deuxième et troisième armatures sont maintenues sensiblement immobiles par rapport au corps de toile, compte-tenu des efforts relatifs exercés par la première casquette **36** et le corps de toile **32** sur lesdites armatures. La première casquette est donc maintenue efficacement en position déployée.

Lorsque l'utilisateur souhaite ranger la tente, il soulève l'échelle **E** de manière à faire pivoter la seconde partie d'embase **24** vers la première partie d'embase **22** de façon à amener l'ossature **20** en position pliée. Les premier, deuxième et troisième arceaux **26,26',26"** pivotent alors vers la première partie d'embase **22** jusqu'à s'étendre contre ladite première partie d'embase. Les première et seconde portions de lignes de liaison et les première et seconde portions de lignes de bord ne sont alors plus tendues de sorte que les première, deuxième et troisième armatures **60,62,64** pivotent par rapport à la première paroi **34** et sont amenées en position rabattue, correspondant à une position de repos, dans laquelle elles s'étendent le long des arceaux et du corps de toile **32.** La première casquette est donc également rabattue, automatiquement et sans intervention directe de l'utilisateur, et s'étend le long du corps de toile.

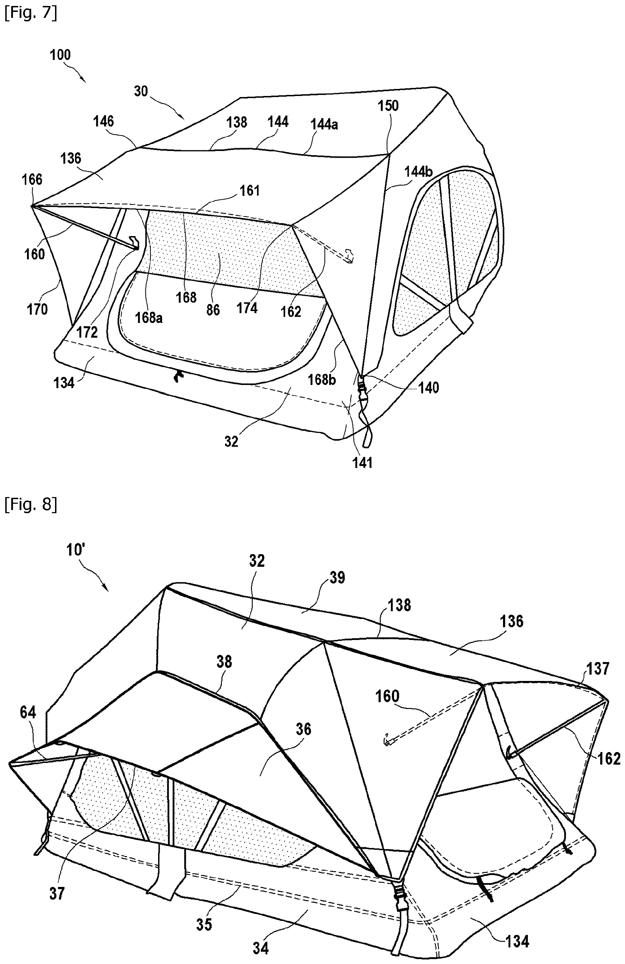

Les figures **6** et **7** illustrent un deuxième mode de réalisation d'une tente déployable **100** selon l'invention, en position déployée. Les éléments communs avec le premier mode de réalisation des figures **1** à **5** portent les mêmes références numériques, augmentées de la valeur 100. Comme on le constate sur la figure **6****,** le corps de toile **32** est ici en deux parties et comprend, en plus de la partie principale **35,** une partie de toit **39** disposée au-dessus de la partie principale et connectée à la partie principale. La partie de toit **39** forme un sur-toit pour la tente. L'armature **20** de la tente selon ce deuxième mode de réalisation est identique à l'armature **20** de la tente du premier mode de réalisation.

Dans ce deuxième mode de réalisation, et tel qu'illustré en figure **6****,** le corps de toile **32** et plus précisément la partie principale **35** comprend une première paroi **134** formant une paroi avant de la tente **100.** Cette première paroi **134** s'étend parallèlement à l'axe de pivotement **X.** La toile de tente **30** comprend en outre une première casquette **136** qui est délimitée du corps de toile **32** par une ligne de liaison **138** s'étendant entre un premier sommet latéral **140** et un second sommet latéral **142.**

Une ouverture **86** est ménagée dans ladite première paroi **134,** la première casquette **136** s'étendant au-dessus de l'ouverture. Cette ouverture forme une entrée pour la tente.

Dans cet exemple non-limitatif, la première casquette **136** est reliée et fixée à la partie de toit **39** du corps de toile **32** sur toute la longueur de la ligne de liaison **138** au moyen d'une couture continue, depuis le premier sommet latéral **140** jusqu'au second sommet latéral **142.** Ladite ligne de liaison **138** délimite la première casquette **136** de la partie de toit **39** du corps de toile **32.** La première casquette comprend également un bord distal libre **137** s'étendant entre les premier et second sommets latéraux.

Dans ce deuxième mode de réalisation, la tente **100** comprend uniquement deux armatures, à savoir une première armature **160** et une deuxième armature **162,** consistant chacune en une tige. Lesdites première et deuxième armatures **160,162** forment une seule et même pièce et sont reliées entre-elles par une portion de connexion **161.** Dans cet exemple non-limitatif, la portion de connexion **161** consiste en une tige reliant les extrémités distales des première et deuxième armatures. Les première et deuxième armatures **160,162** ainsi que la portion de connexion **161** forment un élément de mise en tension ayant la forme d'un « U ». La portion de connexion **161** coopère avec le bord distal libre **137** de la première casquette **136** entre le premier sommet distal **166** et le deuxième sommet distal **174.**

Comme dans le premier mode de réalisation, la ligne de liaison **138** comprend des première et seconde portions de ligne de liaison **144,148** tandis que le bord distal libre **137** comprend des première et seconde portions de bord **168,170.** La première portion de ligne de liaison **144** comprend une première arrête proximale **144a** s'étendant entre le premier sommet supérieur **146** et le deuxième sommet supérieur **150,** ainsi qu'une seconde arrête proximale **144b** s'étendant entre ledit deuxième sommet supérieur **150** et ledit premier sommet latéral **140.** La première portion de bord **168** comprend une première arrête distale **168a** s'étendant entre le premier sommet distal **166** et le deuxième sommet distal **174** du bord distal libre **137,** ainsi qu'une seconde arrête distale **168b** s'étendant entre ledit deuxième sommet distal **174** et le premier sommet latéral **140.**

De façon similaire au premier mode de réalisation, lorsque l'utilisateur amène l'ossature **20** en position dépliée, le corps de toile **32** est mis en tension ainsi que les première et seconde portions de ligne de liaison **144,148** et les première et seconde portions de bord **168,170** sont mises en tension et exercent un effort sur la première armature **160.** De même, les première et seconde arrêtes proximales **144a,144b** de la première portion de ligne de liaison **144** ainsi que les première et seconde arrêtes distales **168a,168b** de la première portion de bord **168** mises en tension exercent un effort sur la deuxième armature **162.**

Les première et deuxième armatures **160, 162** pivotent alors par rapport à la première paroi **134** et par rapport à la partie principale **35** au corps de toile **32** vers le plan d'embase **P,** de la position rabattue jusque dans la position déployée illustrée en figures **6** et **7****.** Dans cette position déployée, les première et deuxième armatures **160, 162** font saillies transversalement à la première paroi **134** de la toile de tente de sorte que la première casquette **136** est déployée.

En d'autres mots, la première armature **160** et donc la première casquette **136** sont amenées automatiquement en position déployée lorsque l'armature est déployée.

La figure **8** illustre un troisième mode de réalisation d'une tente déployable **10'** selon l'invention, comprenant une première casquette **36** similaire à la première casquette **36** du premier mode de réalisation et une deuxième casquette **136** similaire à la première casquette du deuxième mode de réalisation. Lesdites première **36** et deuxième **136** casquettes étant déployées lorsque l'ossature **20** est dépliée, tel que décrit précédemment. Pour ce faire, la tente comprend des première, deuxième et troisième armatures **60,62,64** coopérant avec la première casquette et pouvant notamment prendre une position déployée dans laquelle elle font saillie transversalement à la première paroi **34** de la toile de tente de façon à déployer la première casquette **136** par rapport au corps de toile **32.** La tente **10'** comprend en outre des première et deuxième armatures secondaires **160,162** coopérant avec la deuxième casquette et montées pivotantes par rapport au corps de toile. Ces armatures secondaires peuvent prendre une position déployée dans laquelle elles font saillies transversalement à la deuxième paroi **134** de la toile de tente de façon à déployer la deuxième casquette **136** par rapport au corps de toile.

## Revendications

1. Tente (10,100) déployable comprenant :
- une ossature (20) comprenant une première partie d'embase (22) et une seconde partie d'embase (24) montée pivotante par rapport à la première partie d'embase, autour d'un axe de pivotement (X), entre une position pliée dans laquelle la seconde partie d'embase repose au-dessus de la première partie d'embase, et une position dépliée dans laquelle les première et seconde parties d'embase s'étendent côte à côte dans un plan d'embase (P), de façon à former une embase (25) pour la tente, l'ossature comprenant en outre au moins un premier arceau (26) monté pivotant par rapport à au moins l'une des première et seconde parties d'embase autour d'un premier axe de rotation parallèle audit axe de pivotement (X₁), ledit premier arceau étant configuré pour s'étendre transversalement au plan d'embase lorsque l'ossature est en position dépliée et pour s'étendre entre la première partie d'embase et la seconde partie d'embase lorsque l'ossature est en position pliée;
- une toile de tente (30) coopérant avec l'ossature comprenant :
a. un corps de toile (32), comprenant au moins une première paroi (34,134) de la toile de tente ; et
b. au moins une première casquette (36,136) délimitée du corps de toile par une ligne de liaison (38,138) s'étendant entre un premier sommet latéral (40,140) situé d'un premier côté (41,141) de ladite première paroi et un second sommet latéral (42,142) situé d'un second côté (43,143) de la première paroi, opposé au premier côté, la ligne de liaison comprenant une première portion de ligne de liaison (44,144) s'entendant entre un premier sommet supérieur (46,146) de ladite ligne de liaison et le premier sommet latéral, et une seconde portion de ligne de liaison (48,148) s'étendant entre ledit premier sommet supérieur et ledit second sommet latéral, ladite première casquette comprenant en outre un bord distal libre (37,137) distant de la ligne de liaison et s'étendant entre lesdits premier et second sommets latéraux, le bord distal libre comprenant une première portion de bord (68,168) s'étendant entre un premier sommet distal (66,166) du bord distal libre et le premier sommet latéral et une seconde portion de bord (70,170) s'étendant entre ledit premier sommet distal et le second sommet latéral, **caractérisé en ce que** la tente comprend en outre au moins une première armature (60,160) s'étendant entre le premier sommet distal et le corps de toile, ladite première armature étant en outre articulée de manière pivotante par rapport à la première paroi de la toile de tente en au moins une première partie inférieure (72,172) disposée en-dessous dudit premier sommet supérieur, de sorte que la première armature s'étend sous ladite première casquette lorsque l'ossature est dépliée, ladite première armature pouvant prendre une position déployée et une position rabattue dans laquelle elle s'étend contre le corps de toile, lorsque l'ossature est placée en position pliée, dans laquelle, lorsque l'ossature est amenée en position dépliée, les première et seconde portions de ligne de liaison et les première et seconde portions de bord sont mises en tension et exercent un effort sur la première armature de façon à faire pivoter ladite première armature par rapport au corps de toile vers le plan d'embase, de la position rabattue jusqu'en position déployée dans laquelle elle fait saillie transversalement à la première paroi de la toile de tente de façon à déployer la première casquette par rapport au corps de toile.

2. Tente déployable selon la revendication 1, dans laquelle l'axe de pivotement (X) de la seconde partie d'embase (24) par rapport à la première partie d'embase (22) est confondu avec le premier axe de rotation (X1) du premier arceau (26) par rapport à au moins l'une des première et seconde parties d'embase.

3. Tente déployable selon la revendication 1 ou 2, dans laquelle ladite première armature (60,160) comprend au moins une tige s'étendant entre le premier sommet distal (66,166) du bord distal libre (37,137) de la première casquette (36,136) et la première partie inférieure (72,172), ladite tige étant articulée de manière pivotante par rapport au corps de toile (32).

4. Tente déployable selon l'une quelconque des revendications 1 à 3, dans laquelle la première armature (60,160) s'étend le long dudit premier arceau (26) lorsque l'ossature (20) est en position pliée.

5. Tente déployable selon l'une quelconque des revendications 1 à 4, dans laquelle la première casquette (36,136) est fixée au corps de toile (32) sur sensiblement toute la longueur de la ligne de liaison (38,138), par exemple par couture.

6. Tente déployable selon l'une quelconque des revendications 1 à 5, dans laquelle la première portion de ligne de liaison (44,144) comprend une première arrête proximale (44a,144a) s'étendant entre le premier sommet supérieur (46,146) et un deuxième sommet supérieur (50,150), distant du premier sommet supérieur, ainsi qu'une seconde arrête proximale (44b,144b) s'étendant entre ledit deuxième sommet supérieur et ledit premier sommet latéral (40,140), et dans laquelle la première portion de bord (68,168) comprend une première arrête distale (68a,168a) s'étendant entre ledit premier sommet distal (66,166) et un deuxième sommet distal (74,174) du bord distal libre (37,137), distant du premier sommet distal, et une seconde arrête distale (68b) s'étendant entre ledit deuxième sommet distal et le premier sommet latéral (40), la tente comprenant en outre une deuxième armature (62,162) s'étendant entre le deuxième sommet distal et le corps de toile (32), la deuxième armature étant en outre articulée de manière pivotante par rapport à la première paroi (34,134) de la toile de tente (30) en au moins une deuxième partie inférieure (76,176) disposée en-dessous dudit deuxième sommet supérieur, de sorte que la deuxième armature s'étend sous ladite première casquette (36,136) lorsque l'ossature est dépliée, ladite deuxième armature pouvant prendre une position déployée et une position rabattue dans laquelle elle s'étend contre le corps de toile, lorsque l'ossature (20) est placée en position pliée, dans laquelle lorsque l'ossature est amenée en position dépliée, les première et seconde arrêtes proximales de la première portion de ligne de liaison et les première et seconde arrêtes distales de la première portion de bord sont mises en tension et exercent un effort sur la deuxième armature de façon à faire pivoter ladite deuxième armature par rapport au corps de toile vers le plan d'embase (P) de la position rabattue jusqu'en position déployée dans laquelle elle fait saillie transversalement à la première paroi de la toile de tente de façon à déployer la première casquette par rapport au corps de toile.

7. Tente déployable selon l'une quelconque des revendications 1 à 6, dans laquelle le corps de toile (32) comprend une partie principale (35) coopérant au moins avec ledit premier arceau (26) de manière à former un volume intérieur de la tente (10,100) et une partie de toit (39), connectée à la partie principale, ladite première casquette (36,136) étant reliée à ladite partie de toit.

8. Tente déployable selon l'une quelconque des revendications 1 à 7, dans laquelle ladite première paroi (34) de la toile de tente (30) est une paroi latérale s'étendant transversalement par rapport à l'axe de pivotement (X) de la seconde partie d'embase (24) par rapport à la première partie d'embase (22).

9. Tente déployable selon la revendication 8, dans laquelle la première armature (60) pivote par rapport à la première paroi (34) de la toile de tente (30) dans un plan contenant le premier arceau (26).

10. Tente déployable selon la revendication 8 ou 9, dans laquelle le premier sommet latéral (40) et le second sommet latéral (42) s'étendent de part et d'autre du premier arceau (26).

11. Tente déployable selon l'une quelconque des revendications 8 à 10, dans laquelle le premier sommet latéral (40) et le second sommet latéral (42) sont disposés à proximité des extrémités longitudinales (10a,10b) de la tente (10).

12. Tente déployable (100) selon l'une quelconque des revendications 1 à 7, dans laquelle ladite première paroi (134) de la toile de tente (30) est une paroi avant ou arrière s'étendant sensiblement parallèlement audit axe de pivotement (X) de la seconde partie d'embase (24) par rapport à la première partie d'embase (22).

13. Tente déployable selon les revendications 6 et 12, dans laquelle les première et deuxième armatures (160,162) forment une seule et même pièce.

14. Tente déployable selon la revendication 13, dans laquelle les première et deuxième armatures (160,162) sont reliées entre elles par une portion de connexion (161), ladite portion de connexion coopérant avec le bord distal libre (137) de la première casquette (136) entre le premier sommet distal (162) et le deuxième sommet distal.

15. Tente déployable selon l'une quelconque des revendications 8 à 11, dans laquelle le corps de toile (32) comprend en outre au moins une deuxième paroi (134) qui est transversale à la première paroi (34) et s'étend sensiblement parallèlement audit axe de pivotement (X) de la seconde partie d'embase (24) par rapport à la première partie d'embase (22), la toile de tente (30) comprenant en outre au moins une deuxième casquette (136) délimitée du corps de toile par une ligne de liaison (138) s'étendant entre un premier sommet latéral (140) situé d'un premier côté (141) de ladite deuxième paroi et un second sommet latéral (142) situé d'un second côté (143) de la deuxième paroi, opposé au premier côté, la ligne de liaison comprenant une première portion de ligne de liaison (144) s'entendant entre un premier sommet supérieur (146) de ladite ligne de liaison et le premier sommet latéral, et une seconde portion de ligne de liaison (148) s'étendant entre ledit premier sommet supérieur et ledit second sommet latéral, ladite deuxième casquette comprenant en outre un bord distal libre (170) distant de la ligne de liaison et s'étendant entre lesdits premier et second sommets latéraux, le bord distal libre comprenant une première portion de bord (168) s'étendant entre un premier sommet distal (166) du bord distal libre et le premier sommet latéral et une seconde portion de bord s'étendant entre ledit premier sommet distal et le second sommet latéral, la tente comprenant en outre au moins une première armature secondaire (160) s'étendant entre le premier sommet distal de la deuxième casquette et le corps de toile, ladite première armature secondaire étant en outre articulée de manière pivotante par rapport à la deuxième paroi de la toile de tente en au moins une première partie inférieure (172) disposée en-dessous dudit premier sommet supérieur, de sorte que la première armature secondaire s'étend sous ladite deuxième casquette, ladite première armature secondaire pouvant prendre une position déployée et une position rabattue dans laquelle elle s'étend contre le corps de toile, lorsque l'ossature est placée en position pliée, dans laquelle lorsque l'ossature est amenée en position dépliée, les première et seconde portions de ligne de liaison et les première et seconde portions de bord de la deuxième casquette sont mises en tension et exercent un effort sur la première armature secondaire de façon à faire pivoter ladite première armature secondaire par rapport au corps de toile vers le plan d'embase de la position rabattue jusqu'en position déployée dans laquelle elle fait saillie transversalement à la deuxième paroi de la toile de tente de façon à déployer la deuxième casquette par rapport au corps de toile.

## Patentansprüche

1. Ausfahrbares Zelt (10, 100), umfassend:
- ein Gerüst (20), umfassend einen ersten Bodenteil (22) und einen zweiten Bodenteil (24), der schwenkbar in Bezug auf den ersten Bodenteil um eine Schwenkachse (X) zwischen einer gefalteten Stellung, in welcher der zweite Bodenteil auf dem ersten Bodenteil aufliegt, und einer entfalteten Stellung, in welcher sich der erste und der zweite Bodenteil nebeneinander in einer Bodenebene (P) derart erstrecken, dass ein Boden (25) für das Zelt gebildet wird, angebracht ist, wobei das Gerüst ferner mindestens einen ersten Bogen (26) umfasst, der schwenkbar in Bezug auf mindestens einen von dem ersten und dem zweiten Bodenteil um eine erste Drehachse parallel zu der Schwenkachse (X₁) angebracht ist, wobei der erste Bogen dazu ausgestaltet ist, sich quer zu der Bodenebene zu erstrecken, wenn sich das Gerüst in der entfalteten Stellung befindet, und sich zwischen dem ersten Bodenteil und dem zweiten Bodenteil zu erstrecken, wenn sich das Gerüst in der gefalteten Stellung befindet,
- eine Zeltplane (30), die mit dem Gerüst zusammenwirkt, umfassend:
a. einen Planenkörper (32), umfassend mindestens eine erste Wand (34, 134) der Zeltplane, und
b. mindestens eine erste Kappe (36, 136), die von dem Planenkörper durch eine Verbindungslinie (38, 138) abgegrenzt ist, die sich zwischen einem ersten seitlichen Scheitel (40, 140), der sich auf einer ersten Seite (41, 141) der ersten Wand befindet, und einem zweiten seitlichen Scheitel (42, 142), der sich auf einer zweiten Seite (43, 143) der ersten Wand befindet, die der ersten Seite gegenüberliegt, erstreckt, wobei die Verbindungslinie einen ersten Verbindungslinienabschnitt (44, 144), der sich zwischen einem ersten oberen Scheitel (46, 146) der Verbindungslinie und dem ersten seitlichen Scheitel erstreckt, und einen zweiten Verbindungslinienabschnitt (48, 148), der sich zwischen dem ersten oberen Scheitel und dem zweiten seitlichen Scheitel erstreckt, umfasst, wobei die erste Kappe ferner einen freien distalen Rand (37, 137) umfasst, der von der Verbindungslinie beabstandet ist und sich zwischen dem ersten und dem zweiten seitlichen Scheitel erstreckt, wobei der freie distale Rand einen ersten Randabschnitt (68, 168), der sich zwischen einem ersten distalen Scheitel (66, 166) des freien distalen Rands und dem ersten seitlichen Scheitel erstreckt, und einen zweiten Randabschnitt (70, 170), der sich zwischen dem ersten distalen Scheitel und dem zweiten seitlichen Scheitel erstreckt, umfasst, **dadurch gekennzeichnet, dass** das Zelt ferner mindestens ein erstes Gestänge (60, 160) umfasst, das sich zwischen dem ersten distalen Scheitel und dem Planenkörper erstreckt, wobei das erste Gestänge ferner schwenkbar in Bezug auf die erste Wand der Zeltplane in mindestens einem ersten unteren Teil (72, 172), der unter dem ersten oberen Scheitel angeordnet ist, derart angelenkt ist, dass sich das erste Gestänge unter der ersten Kappe erstreckt, wenn das Gerüst entfaltet ist, wobei das erste Gestänge eine ausgefahrene Stellung und eine eingefahrene Stellung einnehmen kann, in der es sich gegen den Planenkörper erstreckt, wenn das Gerüst in der gefalteten Stellung platziert ist, wobei, wenn das Gerüst in die entfaltete Stellung gebracht wird, der erste und der zweite Verbindungslinienabschnitt und der erste und der zweite Randabschnitt gespannt werden und eine Kraft auf das erste Gestänge derart ausüben, dass bewirkt wird, dass das erste Gestänge in Bezug auf den Planenkörper zu der Bodenebene hin aus der eingefahrenen Stellung bis in die ausgefahrene Stellung schwenkt, in der es quer zu der ersten Wand der Zeltplane derart vorsteht, dass die erste Kappe in Bezug auf den Planenkörper ausgefahren ist.

2. Ausfahrbares Zelt nach Anspruch 1, wobei sich die Schwenkachse (X) des zweiten Bodenteils (24) in Bezug auf den ersten Bodenteil (22) mit der ersten Drehachse (X1) des ersten Bogens (26) in Bezug auf mindestens einen von dem ersten und dem zweiten Bodenteil deckt.

3. Ausfahrbares Zelt nach Anspruch 1 oder 2, wobei das erste Gestänge (60, 160) mindestens eine Stange umfasst, die sich zwischen dem ersten distalen Scheitel (66, 166) des freien distalen Rands (37, 137) der ersten Kappe (36, 136) und dem ersten unteren Teil (72, 172) erstreckt, wobei die Stange schwenkbar in Bezug auf den Planenkörper (32) angelenkt ist.

4. Ausfahrbares Zelt nach einem der Ansprüche 1 bis 3, wobei sich das erste Gestänge (60, 160) entlang des ersten Bogens (26) erstreckt, wenn sich das Gerüst (20) in der gefalteten Stellung befindet.

5. Ausfahrbares Zelt nach einem der Ansprüche 1 bis 4, wobei die erste Kappe (36, 136) an dem Planenkörper (32) über im Wesentlichen die gesamte Länge der Verbindungslinie (38, 138), beispielsweise durch Vernähen, befestigt ist.

6. Ausfahrbares Zelt nach einem der Ansprüche 1 bis 5, wobei der erste Verbindungslinienabschnitt (44, 144) eine erste proximale Kante (44a, 144a), die sich zwischen dem ersten oberen Scheitel (46, 146) und einem zweiten oberen Scheitel (50, 150) erstreckt, der von dem ersten oberen Scheitel beabstandet ist, sowie eine zweite proximale Kante (44b, 144b), die sich zwischen dem zweiten oberen Scheitel und dem ersten seitlichen Scheitel (40, 140) erstreckt, umfasst und wobei der erste Randabschnitt (68, 168) eine erste distale Kante (68a, 168a), die sich zwischen dem ersten distalen Scheitel (66, 166) und einem zweiten distalen Scheitel (74, 174) des freien distalen Rands (37, 137), der von dem ersten distalen Scheitel beabstandet ist, und eine zweite distale Kante (68b), die sich zwischen dem zweiten distalen Scheitel und dem ersten seitlichen Scheitel (40) erstreckt, umfasst, wobei das Zelt ferner ein zweites Gestänge (62, 162) umfasst, das sich zwischen dem zweiten distalen Scheitel und dem Planenkörper (32) erstreckt, wobei das zweite Gestänge ferner schwenkbar in Bezug auf die erste Wand (34, 134) der Zeltplane (30) in mindestens einem zweiten unteren Teil (76, 176), der unter dem zweiten oberen Scheitel angeordnet ist, derart angelenkt ist, dass sich das zweite Gestänge unter der ersten Kappe (36, 136) erstreckt, wenn das Gerüst entfaltet ist, wobei das zweite Gestänge eine ausgefahrene Stellung und eine eingefahrene Stellung einnehmen kann, in der es sich gegen den Planenkörper erstreckt, wenn das Gerüst (20) in der gefalteten Stellung platziert ist, wobei, wenn das Gerüst in die entfaltete Stellung gebracht wird, die erste und die zweite proximale Kante des ersten Verbindungslinienabschnitts und die erste und die zweite distale Kante des ersten Randabschnitts gespannt werden und eine Kraft auf das zweite Gestänge derart ausüben, dass bewirkt wird, dass das zweite Gestänge in Bezug auf den Planenkörper zu der Bodenebene (P) hin aus der eingefahrenen Stellung bis in die ausgefahrene Stellung schwenkt, in der es quer zu der ersten Wand der Zeltplane derart vorsteht, dass die erste Kappe in Bezug auf den Planenkörper ausgefahren ist.

7. Ausfahrbares Zelt nach einem der Ansprüche 1 bis 6, wobei der Planenkörper (32) einen Hauptteil (35), der mindestens mit dem ersten Bogen (26) derart zusammenwirkt, dass er ein Innenvolumen des Zelts (10, 100) bildet, und einen Dachteil (39), der mit dem Hauptteil verbunden ist, umfasst, wobei die erste Kappe (36, 136) mit dem Dachteil verbunden ist.

8. Ausfahrbares Zelt nach einem der Ansprüche 1 bis 7, wobei die erste Wand (34) der Zeltplane (30) eine Seitenwand ist, die sich quer in Bezug auf die Schwenkachse (X) des zweiten Bodenteils (24) in Bezug auf den ersten Bodenteil (22) erstreckt.

9. Ausfahrbares Zelt nach Anspruch 8, wobei das erste Gestänge (60) in Bezug auf die erste Wand (34) der Zeltplane (30) in einer den ersten Bogen (26) enthaltenden Ebene schwenkt.

10. Ausfahrbares Zelt nach Anspruch 8 oder 9, wobei sich der erste seitliche Scheitel (40) und der zweite seitliche Scheitel (42) beiderseits des ersten Bogens (26) erstrecken.

11. Ausfahrbares Zelt nach einem der Ansprüche 8 bis 10, wobei der erste seitliche Scheitel (40) und der zweite seitliche Scheitel (42) in der Nähe der Längsenden (10a, 10b) des Zelts (10) angeordnet sind.

12. Ausfahrbares Zelt (100) nach einem der Ansprüche 1 bis 7, wobei die erste Wand (134) der Zeltplane (30) eine vordere oder hintere Wand ist, die sich im Wesentlichen parallel zu der Schwenkachse (X) des zweiten Bodenteils (24) in Bezug auf den ersten Bodenteil (22) erstreckt.

13. Ausfahrbares Zelt nach den Ansprüchen 6 und 12, wobei das erste und das zweite Gestänge (160, 162) ein und dasselbe Stück bilden.

14. Ausfahrbares Zelt nach Anspruch 13, wobei das erste und das zweite Gestänge (160, 162) miteinander durch einen Verbindungsabschnitt (161) verbunden sind, wobei der Verbindungsabschnitt mit dem freien distalen Rand (137) der ersten Kappe (136) zwischen dem ersten distalen Scheitel (162) und dem zweiten distalen Scheitel zusammenwirkt.

15. Ausfahrbares Zelt nach einem der Ansprüche 8 bis 11, wobei der Planenkörper (32) ferner mindestens eine zweite Wand (134) umfasst, die quer zu der ersten Wand (34) verläuft und sich im Wesentlichen parallel zu der Schwenkachse (X) des zweiten Bodenteils (24) in Bezug auf den ersten Bodenteil (22) erstreckt, wobei die Zeltplane (30) ferner mindestens eine zweite Kappe (136) umfasst, die von dem Planenkörper durch eine Verbindungsline (138) abgegrenzt ist, die sich zwischen einem ersten seitlichen Scheitel (140), der sich auf einer ersten Seite (141) der zweiten Wand befindet, und einem zweiten seitlichen Scheitel (142), der sich auf einer zweiten Seite (143) der zweiten Wand befindet, die der ersten Seite gegenüberliegt, erstreckt, wobei die Verbindungslinie einen ersten Verbindungslinienabschnitt (144), der sich zwischen einem ersten oberen Scheitel (146) der Verbindungslinie und dem ersten seitlichen Scheitel erstreckt, und einen zweiten Verbindungslinienabschnitt (148), der sich zwischen dem ersten oberen Scheitel und dem zweiten seitlichen Scheitel erstreckt, umfasst, wobei die zweite Kappe ferner einen freien distalen Rand (170) umfasst, der von der Verbindungslinie beabstandet ist und sich zwischen dem ersten und dem zweiten seitlichen Scheitel erstreckt, wobei der freie distale Rand einen ersten Randabschnitt (168), der sich zwischen einem ersten distalen Scheitel (166) des freien distalen Rands und dem ersten seitlichen Scheitel erstreckt, und einen zweiten Randabschnitt, der sich zwischen dem ersten distalen Scheitel und dem zweiten seitlichen Scheitel erstreckt, umfasst, wobei das Zelt ferner mindestens ein erstes Sekundärgestänge (160) umfasst, das sich zwischen dem ersten distalen Scheitel der zweiten Kappe und dem Planenkörper erstreckt, wobei das erste Sekundärgestänge ferner schwenkbar in Bezug auf die zweite Wand der Zeltplane in mindestens einem ersten unteren Teil (172), der unter dem ersten oberen Scheitel angeordnet ist, derart angelenkt ist, dass sich das erste Sekundärgestänge unter der zweiten Kappe erstreckt, wobei das erste Sekundärgestänge eine ausgefahrene Stellung und eine eingefahrene Stellung einnehmen kann, in der es sich gegen den Planenkörper erstreckt, wenn das Gerüst in der gefalteten Stellung platziert ist, wobei, wenn das Gerüst in die entfaltete Stellung gebracht wird, der erste und der zweite Verbindungslinienabschnitt und der erste und der zweite Randabschnitt der zweiten Kappe gespannt werden und eine Kraft auf das erste Sekundärgestänge derart ausüben, dass bewirkt wird, dass das erste Sekundärgestänge in Bezug auf den Planenkörper zu der Bodenebene hin aus der eingefahrenen Stellung bis in die ausgefahrene Stellung schwenkt, in der es quer zu der zweiten Wand der Zeltplane derart vorsteht, dass die zweite Kappe in Bezug auf den Planenkörper ausgefahren ist.

## Claims

1. A deployable tent (10,100) comprising:
- a frame (20) comprising a first base part (22) and a second base part (24) mounted pivotably with respect to the first base part, about an axis of pivot (X), between a folded position in which the second base part rests above the first base part, and an unfolded position in which the first and second base parts extend side-by-side in a base plane (P), in such a way as to form a base (25) for the tent, the frame further comprising at least a first pole (26) mounted pivotably with respect to at least one of the first and second base parts about a first axis of rotation parallel to said axis of pivot (X₁), said first pole being configured to extend transversely to the base plane when the frame is in the unfolded position and to extend between the first base part and the second base part when the frame is in the folded position;
- a tent canvas (30) interacting with the frame comprising:
a. a canvas body (32), comprising at least a first wall (34,134) of the tent canvas; and
b. at least a first canopy (36,136) delineated from the canvas body by a connecting line (38,138) extending between a first lateral apex (40,140) located on a first side (41,141) of said first wall and a second lateral apex (42,142) located on a second side (43,143) of the first wall, opposite the first side, the connecting line comprising a first connecting line portion (44,144) extending between a first upper apex (46,146) of said connecting line and the first lateral apex, and a second connecting line portion (48,148) extending between said first upper apex and said second lateral apex, said first canopy further comprising a free distal edge (37,137) distant from the connecting line and extending between said first and second lateral apices, the free distal edge comprising a first edge portion (68,168) extending between a first distal apex (66,166) of the free distal edge and the first lateral apex and a second edge portion (70,170) extending between said first distal apex and the second lateral apex, **characterized in that** the tent further comprises at least a first reinforcement (60,160) extending between the first distal apex and the canvas body, said first reinforcement being furthermore articulated pivotably with respect to the first wall of the tent canvas in at least a first lower part (72,172) disposed below said first upper apex, such that the first reinforcement extends under said first canopy when the frame is unfolded, said first reinforcement being able to take a deployed position and a folded-down position in which it extends against the canvas body, when the frame is placed in the folded position,
in which, when the frame is brought into the unfolded position, the first and second connecting line portions and the first and second edge portions are tensioned and exert a force on the first reinforcement such as to pivot said first reinforcement with respect to the canvas body toward the base plane, from the folded-down position into the deployed position in which it protrudes transversely to the first wall of the tent canvas such as to deploy the first canopy with respect to the canvas body.

2. The deployable tent according to claim 1, wherein the axis of pivot (X) of the second base part (24) with respect to the first base part (22) is colinear with the first axis of rotation (X1) of the first pole (26) with respect to at least one of the first and second base parts.

3. The deployable tent according to claim 1 or 2, wherein said first reinforcement (60,160) comprises at least one rod extending between the first distal apex (66,166) of the free distal edge (37,137) of the first canopy (36,136) and the first lower part (72,172), said rod being articulated pivotably with respect to the canvas body (32).

4. The deployable tent according to any one of claims 1 to 3, wherein the first reinforcement (60,160) extends along said first pole (26) when the frame (20) is in the folded position.

5. The deployable tent according to any one of claims 1 to 4, wherein the first canopy (36,136) is attached to the canvas body (32) over substantially the whole length of the connecting line (38,138), for example by seams.

6. The deployable tent according to any one of claims 1 to 5, wherein the first connecting line portion (44,144) comprises a first proximal edge (44a,144a) extending between the first upper apex (46,146) and a second upper apex (50,150), distant from the first upper apex, as well as a second proximal edge (44b,144b) extending between said second upper apex and said first lateral apex (40,140), and wherein the first edge portion (68,168) comprises a first distal edge (68a,168a) extending between said first distal apex (66,166) and a second distal apex (74,174) of the free distal edge (37,137), distant from the first distal apex, and a second distal edge (68b) extending between said second distal apex and the first lateral apex (40), the tent further comprising a second reinforcement (62,162) extending between the second distal apex and the canvas body (32), the second reinforcement being furthermore articulated pivotably with respect to the first wall (34,134) of the tent canvas (30) in at least a second lower part (76,176) disposed below said second upper apex, such that the second reinforcement extends under said first canopy (36,136) when the frame is unfolded, said second reinforcement being able to take a deployed position and a folded-down position in which it extends against the canvas body, when the frame (20) is placed in the folded position, in which, when the frame is brought into the unfolded position, the first and second proximal vertices of the first connecting line portion and the first and second distal vertices of the first edge portion are tensioned and exert a force on the second reinforcement such as to pivot said second reinforcement with respect to the canvas body toward the base plane (P) from the folded-down position into the deployed position in which it protrudes transversely to the first wall of the tent canvas such as to deploy the first canopy with respect to the canvas body.

7. The deployable tent according to any one of claims 1 to 6, wherein the canvas body (32) comprises a main part (35) interacting at least with said first pole (26) in such a way as to form an inner volume of the tent (10,100) and a roof part (39), connected to the main part, said first canopy (36,136) being connected to said roof part.

8. The deployable tent according to any one of claims 1 to 7, wherein said first wall (34) of the tent canvas (30) is a lateral wall extending transversely with respect to the axis of pivot (X) of the second base part (24) with respect to the first base part (22).

9. The deployable tent according to claim 8, wherein the first reinforcement (60) pivots with respect to the first wall (34) of the tent canvas (30) in a plane containing the first pole (26).

10. The deployable tent according to claim 8 or 9, wherein the first lateral apex (40) and the second lateral apex (42) extend on either side of the first pole (26).

11. The deployable tent according to any one of claims 8 to 10, wherein the first lateral apex (40) and the second lateral apex (42) are disposed in proximity to the longitudinal ends (10a,10b) of the tent (10).

12. The deployable tent (100) according to any one of claims 1 to 7, wherein said first wall (134) of the tent canvas (30) is a front or back wall extending substantially parallel to said axis of pivot (X) of the second base part (24) with respect to the first base part (22).

13. The deployable tent according to claims 6 and 12, wherein the first and second reinforcements (160,162) form one and the same part.

14. The deployable tent according to claim 13, wherein the first and second reinforcements (160,162) are interconnected by a connecting portion (161), said connecting portion interacting with the free distal edge (137) of the first canopy (136) between the first distal apex (162) and the second distal apex.

15. The deployable tent according to any one of claims 8 to 11, wherein the canvas body (32) further comprises at least a second wall (134) which is transverse to the first wall (34) and extends substantially parallel to said axis of pivot (X) of the second base part (24) with respect to the first base part (22), the tent canvas (30) further comprising at least a second canopy (136) delineated from the canvas body by a connecting line (138) extending between a first lateral apex (140) located on a first side (141) of said second wall and a second lateral apex (142) located on a second side (143) of the second wall, opposite the first side,
the connecting line comprising a first connecting line portion (144) extending between a first upper apex (146) of said connecting line and the first lateral apex, and a second connecting line portion (148) extending between said first upper apex and said second lateral apex, said second canopy further comprising a free distal edge (170) distant from the connecting line and extending between said first and second lateral apices, the free distal edge comprising a first edge portion (168) extending between a first distal apex (166) of the free distal edge and the first lateral apex and a second edge portion extending between said first distal apex and the second lateral apex, the tent further comprising at least a first secondary reinforcement (160) extending between the first distal apex of the second canopy and the canvas body, said first secondary reinforcement being furthermore articulated pivotably with respect to the second wall of the tent canvas in at least a first lower part (172) disposed below said first upper apex, such that the first secondary reinforcement extends under said second canopy, said first secondary reinforcement being able to take a deployed position and a folded-down position in which it extends against the canvas body, when the frame is placed in the folded position, in which, when the frame is brought into the unfolded position, the first and second connecting line portions and the first and second edge portions of the second canopy are tensioned and exert a force on the first secondary reinforcement such as to make said first secondary reinforcement pivot with respect to the canvas body toward the base plane from the folded-down position into the deployed position in which it protrudes transversely to the second wall of the tent canvas such as to deploy the second canopy with respect to the canvas body.
